# EUROPÄISCHE PATENTANMELDUNG

(11) **EP 1 139 139 A2**
(43) Veröffentlichungstag der Anmeldung: **04.10.2001**
(21) Anmeldenummer: 01105917.7
(22) Anmeldetag: 09.03.2001
(51) Int. Cl.: G02B 21/00

(54) **Verfahren zur Detektion und Analyse eines Objekts**

(30) Priorität: 28.03.2000 DE 10015121
(71) Anmelder: Leica Microsystems Heidelberg GmbH, 68165 Mannheim (DE)
(72) Erfinder: Engelhardt, Johann, Dr., 76669 Bad Schönborn (DE); Knebel, Werner, Dr., 76709 Kronau (DE)
(74) Vertreter: Reichert, Werner F., Dr.

(57) **Zusammenfassung**

Die vorliegende Erfindung betrifft ein Verfahren zur Detektion und Analyse eines Objekts bei der konfokalen Fluoreszenz-Rastermikroskopie (1), wobei das Objekt bei einer vorgebbaren Systemparametereinstellung (2) detektiert wird, und ist zur optimalen Systemparametereinstellung (2) sowie zur optimalen Einstellung der Detektionswellenlängenbereiche (21, 22) unter Berücksichtigung des zu detektierenden Objekts dadurch gekennzeichnet, dass die detektierten Objektdaten (3) nach einem vorgebbaren Algorithmus (4) verarbeitet werden und dass zur weiteren Datendetektion die Systemparametereinstellung (2) anhand der verarbeiteten Objektdaten (3) verbessert wird.

## Beschreibung

Die vorliegende Erfindung betrifft ein Verfahren zur Detektion und Analyse eines Objekts bei der konfokalen Fluoreszenz-Rastermikroskopie, wobei das Objekt bei einer vorgebbaren Einstellung von Systemparametern detektiert wird.

Konfokale Fluoreszenz-Rastermikroskope sind seit Jahren aus der Praxis bekannt und werden insbesondere für medizinische und biologische Applikationen eingesetzt. Insbesondere ist aus der DE 199 02 625 ein konfokales Fluoreszenz-Rastermikroskop bekannt, das ein Detektormodul aufweist, mit dem mehrere Detektionswellenlängenbereiche variabel eingestellt werden können. Der wesentliche Vorteil dieses Rastermikroskops verglichen zu konfokalen Rastermikroskopen mit einem fest vorgegebenen Filtersatz ist, dass es sehr flexibel einsetzbar, so dass nahezu alle Fluoreszenzfarbstoffe mit diesem Detektormodul detektierbar sind, ohne an die fest eingebauten Filtersätze der herkömmlichen Filter-Detektormodulen - und somit an fest vorgegebene Fluoreszenzfarbstoffe - gebunden zu sein.

Konfokale Rastermikroskope erfordern vom Anwender hinreichende Kenntnis über die Bedienung eines solchen Rastermikroskops, nämlich zur Einstellung der voneinander abhängigen und oftmals auch einander entgegenwirkenden Systemparameter. Dazu gehören Pinhole-Durchmesser, Verstärkerspannung und Verstärkeroffset des Photomultiplier, Laserleistung, etc. Als weitere Systemparameter für das aus der DE 199 02 625 bekannte Detektormodul sind die Detektionswellenlängenbereiche einzustellen, wobei insbesondere hierbei eine große Variation und Kombination möglich ist, da der Benutzer für jeden Detektionswellenlängenbereich die Anfangs- und Endwellenlänge festlegen bzw. vorgeben muss. Wenn ein Benutzer die Systemparameter des Rastermikroskops nicht optimal einstellt, resultiert hieraus eine Bildaufnahme mit reduzierter Bildqualität, die eine wunschgemäße Analyse der aufgenommenen Bilddaten erschwert bzw. unter Umständen unmöglich macht.

Aus der DE 198 53 407 ist für sich gesehen ein Verfahren zur Einstellung der Systemparameter eines Rastermikroskops bekannt. Hierbei gibt der Benutzer über eine Benutzerführung im Dialog mindestens ein Objektparameter und/oder mindestens eine auswählbare Systemparametereinstellung vor. Die übrigen Systemparameter werden dem Benutzer vorgeschlagen und/oder automatisch eingestellt.

Das aus der DE 198 53 407 bekannte Verfahren ist zu einer ersten Datenaufnahme insbesondere für ungeübte Benutzer eines Rastermikroskops hilfreich. Weitergehende Hilfestellungen zur Einstellung der Systemparameter, insbesondere in Abhängigkeit von dem zu detektierenden Objekt, sind in diesem Verfahren nicht vorgesehen.

Der vorliegenden Erfindung liegt daher die Aufgabe zugrunde, die Systemparametereinstellung sowie die Einstellung der Detektionswellenlängenbereiche bei konfokalen Fluoreszenz-Rastermikroskopen unter Berücksichtigung des zu detektierenden Objekts optimal einzustellen.

Das erfindungsgemäße Verfahren löst die voranstehende Aufgabe durch die Merkmale des Patentanspruchs 1.

Erfindungsgemäß ist zunächst erkannt worden, dass die Einstellung für die Systemparameter dadurch optimiert werden kann, dass mit dem konfokalen Fluoreszenz-Rastermikroskop zunächst eine Objektdetektion bei einer vorgebbaren Systemparametereinstellung durchgeführt wird. Die vorgebbare Systemparametereinstellung könnte beispielsweise mit dem aus der DE 198 53 407 bekannten Verfahren erfolgen. Die zunächst detektierten Objektdaten werden sodann mit einem Algorithmus verarbeitet, der qualitative und/oder quantitative Informationen aus dem Objektdatensatz extrahiert. Mit Hilfe dieser Informationen wird dann entweder eine neue Datenaufnahme bei verbesserter Systemparametereinstellung automatisch durchgeführt oder es werden dem Benutzer alternative Möglichkeiten der weiteren Datendetektion aufgezeigt.

Die erfindungsgemäße Vorgehensweise ermöglicht eine systematische bzw. schrittweise Verbesserung der Systemparametereinstellung mit oder ohne Zutun des Benutzers des konfokalen Rastermikroskops. Die wiederholte Durchführung des erfindungsgemäßen Verfahrens resultiert im Idealfall in einer Optimierung der Systemparametereinstellung des konfokalen Fluoreszenz-Rastermikroskops, also letztendlich in einer Optimierung der detektierten Objektdatenqualität. In besonders vorteilhafter Weise ist der Benutzer eines Rastermikroskops nicht mehr darauf angewiesen nach dem sogenannten "Try and Error"-Verfahren solange sämtliche relevanten Systemparameter zu verändern und jeweils eine Datenaufnahme durchzuführen, bis schließlich die aufgenommenen Objektdaten hinsichtlich ihrer Qualität eine sinnvolle Objektdatenanalyse ermöglichen.

Die wichtigsten und für das erfindungsgemäße Verfahren relevanten Systemparameter sind:
- die Anregungswellenlänge
- die Leistung der Lichtquelle
- der Detektionswellenlängenbereich
- die Verstärkerspannung und der Verstärkeroffset des Photomultiplier bzw. des Detektorsystems
- der Anregungs- bzw. der Detektionspinhole-Durchmesser
- die Anzahl der Mittelungen mehrmals gescannter Objektbereiche
- die Scangeschwindigkeit
- die Abtastdichte des Beleuchtungsmusters
- die gescannte laterale bzw. axiale Bildfeldgröße
- der Vergrößerungsfaktor.

Die detektierten Objektdaten weisen üblicherweise Intensitätsinformationen des Objekts in Abhängigkeit der Ortskoordinaten auf. Insbesondere für Mehrfarben-Fluoreszenzanwendungen können die detektierten Objektdaten für jede Ortskoordinate Wellenlängeninformationen aufweisen, die bspw. in Form eines Spektrums vorliegen. Aus diesen Informationen können anhand von Farbumschlägen bzw. -veränderungen eines Farbstoffs oder der Verschiebung von Emissionsprofilen weitreichende Rückschlüsse auf Objekteigenschaften erfolgen. Bei der Untersuchung lebender Objekte, bspw. bei physiologischen Fragestellungen, könnten die detektierten Objektdaten Zeitinformationen aufweisen. Hierbei könnte die zeitliche Veränderung einer Fluoreszenz-Farbstoffkonzentration als Funktion der Ortskoordinate des Objekts vorliegen. Darüber hinaus könnten die detektierten Objektdaten Polarisationsinformationen und/oder Fluoreszenzlebensdauerinformationen aufweisen.

Der Algorithmus, nach dem die detektierten Objektdaten verarbeitet werden, könnte einen Vergleich mehrerer detektierter Objektdatensätze umfassen. Hierbei werden vorzugsweise die gleichen Informationsklassen miteinander verglichen, bspw. die Wellenlängeninformation des ersten mit der des zweiten detektierten Objektdatensatzes. Auch der Vergleich mehrerer Objektinformationsklassen mehrerer detektierter Objektdatensätze miteinander sowie ein Vergleich unterschiedlicher Objektinformationsklassen mehrerer detektierter Objektdatensätze ist ebenfalls denkbar.

Der Algorithmus könnte das Verhältnis mehrerer detektierter Objektdatensätze zueinander umfassen. Vorzugsweise werden lediglich zwei detektierte Objektdatensätze miteinander ins Verhältnis zu setzen sein. Das ins Verhältnissetzen von einem Objektdatensatz mit mehreren anderen Objektdatensätzen ist ebenfalls denkbar, beispielsweise könnte ein erster Objektdatensatz mit den nachfolgend aufgenommenen Objektdatensätzen bei einer Zeitserienaufnahme ins Verhältnis gesetzt werden.

In einer konkreten Ausführungsform umfasst der Algorithmus die Bestimmung des Signal-zu-Rausch-Verhältnisses der detektierten Objektdaten. Der Ergebniswert dieser Bestimmung ist eine Maßzahl für die Qualität der detektierten Objektdaten und könnte insbesondere zur Optimierung der Objektdatenqualität herangezogen werden.

In einer bevorzugten Ausführungsform umfasst der Algorithmus eine Histogrammbildung der detektierten Objektdaten. Die Histogrammbildung kann sich hierbei auf eine einzelne Objektinformationsklasse beziehen, eine Histogrammbildung mehrerer bzw. aller Objektinformationsklassen eines Objektdatensatzes ist ebenfalls denkbar.

In einer bevorzugten Ausführungsform ist eine Faltungsbildung und/oder eine Korrelationsoperation der detektierten Objektdaten vorgesehen. Hierbei könnte die Faltung zwischen mehreren detektierten Objektdatensätzen oder zwischen einem detektierten Objektdatensatz und einem Musterdatensatz erfolgen. Auch die Faltung von detektierten Objektdatensätzen mit einer Maskenfunktion ist ebenfalls denkbar. Als Korrelationsoperation könnte eine Autokorrelation eines detektierten Objektdatensatzes mit sich selbst oder eine Kreuzkorrelation zweier detektierter Objektdatensätze miteinander vorgesehen sein. Die Faltung kann entweder im Orts- oder im Frequenzraum erfolgen. Entsprechende Transformationen vom Ortsaum in den Frequenzraum wären dann dem Algorithmus einverleibt und entsprechend anzuwenden.

Der Algorithmus könnte eine Mustererkennung und/oder eine Strukturanalyse der detektierten Objektdaten umfassen. Auch könnte der Algorithmus Objektformparameter extrahieren. Letztendlich könnten die detektierten Objektdaten mit Hilfe des Algorithmus dahingehend untersucht werden, ob ein vorgegebenes Objektmuster oder eine vorgegebene Objektstruktur und/oder Objektanzahl vorliegt und in welcher Ausprägung die gemessenen Objekteigenschaften mit der Vorgabe übereinstimmen. Die Mustererkennung und/oder Strukturanalyse könnten hierbei mit den gängigen Methoden der digitalen Bildverarbeitung erfolgen.

Der Algorithmus könnte eine Sortierung und/oder Segmentierung und/oder Filterung der detektierten Objektdaten umfassen. Hierbei könnte die entsprechende Operation auf den Ortsraum, auf den Fourierraum, auf den Farbraum oder auf den Zeitraum wirken. Der Algorithmus könnte in gleicher Weise auf die detektierten Polarisations-Objektdaten oder auf die detektierten Lebensdauer-Objektdaten angewandt werden.

In besonders vorteilhafter Weise berücksichtigt der Algorithmus die Systemparametereinstellungen der vorausgegangenen Datendetektion. Insbesondere ist bei der Analyse der Wellenlängeninformationen der detektierten Objektdaten die Systemparametereinstellung der Detektionswellenlängenbereiche von großer Bedeutung, die daher in den Algorithmus mit einbezogen werden.

Der Algorithmus ist mit einem Expertensystem gekoppelt. Das Expertensystem könnte bspw. eine Datenbank umfassen, in der vorangegangene Aufnahmen von Objektdatensätzen samt deren Klassifizierung bzw. verbesserter Systemparametereinstellung abgespeichert sind.

Darüber hinaus könnte der Algorithmus Methoden der Fuzzy-Logic beinhalten. Die Methoden der Fuzzy-Logic könnten insbesondere bei der Analyse von Wellenlängeninformationen der detektierten Objektdatensätze oder bei der Vorgabe subjektiver Analysemerkmale Verwendung finden.

Eine Kombination der bislang erwähnten unterschiedlichen Algorithmen zur Verarbeitung der detektierten Objektdaten ist ebenfalls vorgesehen. Insbesondere könnten die Algorithmen modular ausgebildet sein, wodurch sich eine komplexe Datenverarbeitung durch die Zusammenstellung mehrerer Module realisieren lässt.

In einer besonders bevorzugten Ausführungsform umfasst der Algorithmus eine graphische Aufbereitung der detektierten Objektdaten. Diese graphische Aufbereitung erfolgt in einer eindimensionalen und/oder mehrdimensionalen Datenrepräsentation. Ganz allgemein sind alle vom Objekt detektierten Objektinformationen zur Datenrepräsentation vorgesehen. Im Hinblick auf eine übersichtliche Datenrepräsentation kann sich die grafische Aufbereitung auf die Repräsentation einer einzelnen Objektinformation beschränken. Die Objektinformationen können Intensitätsinformationen, Farbinformationen, Wellenlängeninformationen, Zeitinformationen, Polarisationsinformationen und/oder Fluoreszenzlebensdauerinformationen beinhalten.

Zur mehrdimensionalen Datenrepräsentation könnte die graphische Aufbereitung in Form eines Höhenplots erfolgen. Dieser Höhenplot-Repräsentation könnte eine Linie und/oder eine Bildebene und/oder einen Bildbereich der detektierten Objektdaten zugrunde liegen. So würde beispielsweise die Höhenplot-Repräsentation einer Bildebene deren Koordinatensystem in einer Pseudo-3D-Darstellung zeigen, wobei zu jedem XY-Wert der Bildebene in z-Richtung der entsprechende Informationswert aufgetragen ist, beispielsweise die Fluoreszenzlebensdauer oder die Fluoreszenzintensität. Alternativ hierzu erfolgt die graphische Aufbereitung in Form eines Histogramms. So könnte beispielsweise die Anzahl der Häufigkeit des Auftretens von unterschiedlichen Intensitätswerten als Funktion der Intensitätswerte aufgetragen werden. Die zu repräsentierende Objektinformationsklasse kann es erforderlich machen, dass die Histogramm-Repräsentation mehrdimensional ausgebildet ist. Dies ist insbesondere dann erforderlich, wenn die zu repräsentierende Objektinformationsklasse mehrdimensionale Informationseinträge aufweist, beispielsweise ein komplettes Wellenlängenspektrum für jeden einzelnen Objektpunkt des Objektdatensatzes.

Weiterhin ist für die graphische Aufbereitung eine Extremwertrepräsentation bzw. eine Repräsentation charakteristischer Werte der detektierten Objektdaten vorgesehen. Zur Extremwertrepräsentation von Wellenlängeninformationen detektierter Objektdaten könnte beispielsweise jeder XYZ-Punkt des gemessenen Objektdatensatzes in der Farbe dargestellt werden, die der Wellenlänge entspricht, an der das Spektrum dieses Punktes ein Maximum aufweist. Die Repräsentation charakteristischer Werte der detektierten Objektdaten könnte beispielsweise die Hervorhebung all derjenigen Objektpunkte sein, die mit zwei unterschiedlichen Fluoreszenzfarbstoffen markiert sind. Ganz allgemein kann sich die Repräsentation auf alle vorliegenden Objektinformationsklassen beziehen.

Die graphische Aufbereitung wird von einer Ausgabevorrichtung ausgegeben. Die Ausgabevorrichtung könnte ein Monitor eines Computers, ein Stereo-Display oder eine zur Virtual-Reality geeignete Ausgabevorrichtung sein. In einer bevorzugten Ausführungsform erfolgt die graphische Ausgabe während der Datenaufnahme.

Nachdem die detektierten Objektdaten mit dem vorgebbaren Algorithmus verarbeitet sind, erfolgt anhand von vorgebbaren objektiven und/oder subjektiven Kriterien eine weitere Datenaufnahme und zwar vorzugsweise automatisch. Hierbei werden die vorgebbaren Kriterien mit den Ergebniswerten des Algorithmus verglichen. Ergibt der Vergleich, dass das Kriterium zur weiteren Datenaufnahme erfüllt ist, so erfolgt eine weitere Datendetektion unter verbesserter Systemparametereinstellung. Ein Kriterium zur weiteren Datenaufnahme könnte hierbei die Optimierung der Signalausbeute oder die Optimierung der Objektseparation sein.

Alternativ hierzu könnte vorgesehen sein, dass zur weiteren Datenaufnahme dem Benutzer automatisch eine Auswahl unterschiedlicher Detektionsmöglichkeiten vorgeschlagen wird. Jeder Vorschlag könnte einer anderen Möglichkeit der Optimierung der weiteren Datendetektion darstellen, so dass letztendlich eine Objektdatenaufnahme derart erfolgt, dass die vom Benutzer gewünschte Datenanalyse möglich ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: eine schematische Darstellung des erfindungsgemäßen Verfahrens,
- Fig. 2: in eine schematische Darstellung eines konfokalen Fluoreszenz-Rastermikroskops, bei dem das erfindungsgemäße Verfahren realisiert ist,
- Fig. 3: ein Diagramm der Wellenlängeninformation gemessener Objektdaten,
- Fig. 4: eine schematische Repräsentation der Wellenlängeninformation eines Objektpunkts,
- Fig. 5: eine Höhenplot-Repräsentation einer bestimmten Wellenlängeninformation eines Objektpunkts,
- Fig. 6: eine weitere Informationsrepräsentation eines Objektpunkts und
- Fig. 7: eine schematische Darstellung einer mehrdimensionalen Histogramm-Repräsentation.

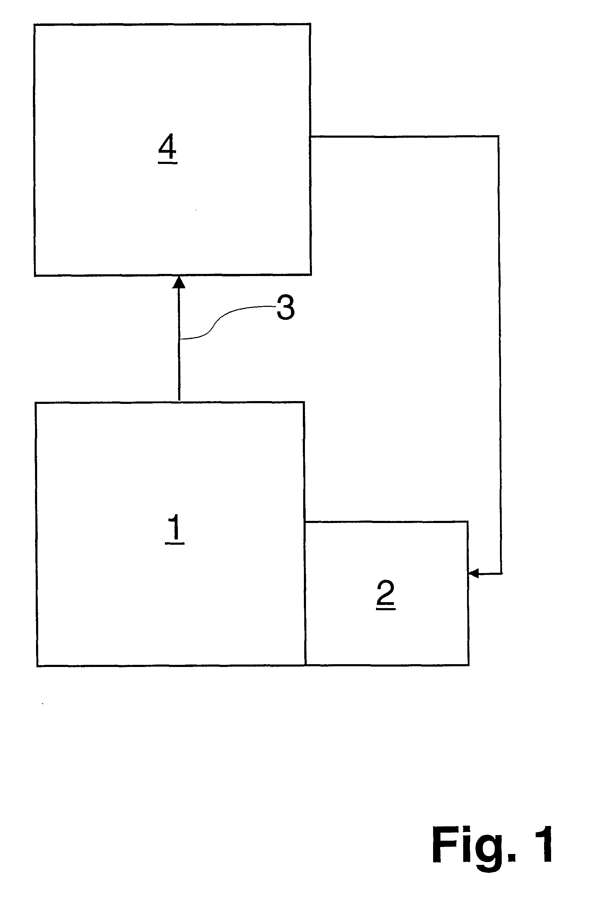

Die Fig. 1 zeigt in schematischer Darstellung ein Verfahren zur Detektion und Analyse eines Objekts mit einem konfokalen Fluoreszenz-Rastermikroskop 1, wobei das Objekt bei einer vorgebbaren Einstellung von Systemparametern 2 detektiert wird.

Erfindungsgemäß werden die detektierten Objektdaten 3 nach einem vorgebbaren Algorithmus 4 verarbeitet. Zur weiteren Datendetektion wird die Einstellung der Systemparameter 2 anhand der verarbeiteten Objektdaten verbessert.

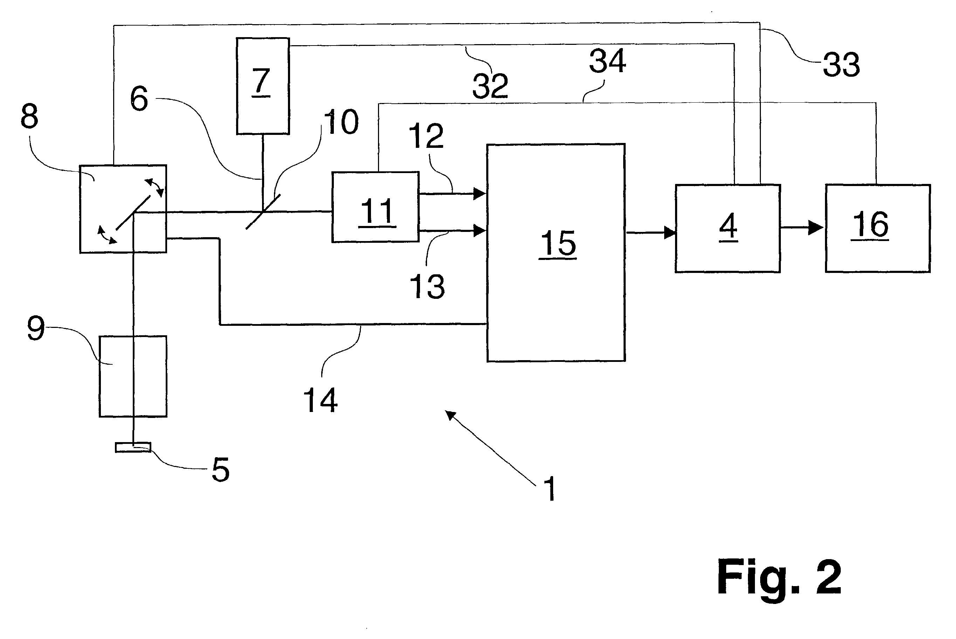

Die Fig. 2 zeigt in einer schematischen Darstellung die einzelnen Baugruppen eines konfokalen Fluoreszenz-Rastermikroskops 1, mit dem ein mit zwei Fluoreszenzfarbstoffen markiertes Objekt detektiert wird, um so Wellenlängeninformationen des Objekts zu erhalten. Hierzu wird das Objekt 5 mit Anregungslicht 6 der Laserlichtquelle 7 beleuchtet. Die Scanvorrichtung 8 lenkt hierbei den Beleuchtungsstrahl in XY-Richtung ab, so dass ein zweidimensionales Bild des Objekts aufgenommen werden kann. Das Anregungslicht 6 wird von dem Objektiv 9 in einen Punkt fokussiert. Das vom Anregungslicht 6 hervorgerufene Fluoreszenzlicht durchläuft das Objektiv 9, die Scanvorrichtung 8 und passiert den dichroitischen Strahlenteiler 10. Das vom Detektormodul 11 detektierte Fluoreszenzlicht liefert die Intensitätssignale 12, 13 der beiden Fluoreszenzfarbstoffe, mit denen das Objekt 5 spezifisch markiert ist. Zusammen mit dem Positionssignal 14 der Scanvorrichtung 8 erzeugt das dem Detektormodul 11 nachgeordnete Steuermodul 15 des konfokalen Fluoreszenz-Rastermikroskops 1 ein Objektbild. Das Steuermodul 15 speichert die zunächst aufgenommenen Objektdaten in Abhängigkeit des Positionssignals 14, so dass für jede aufgenommene Objektebene jedes Fluoreszenzfarbstoffs jeweils eine Bildebene vorliegt. Die detektierten Objektdaten werden von dem vorgegebenen Algorithmus 4 weiterverarbeitet, der eine Segmentierung der Objektdaten im Farbraum umfasst. Die segmentierten Objektdaten werden auf der Ausgabevorrichtung 16 in Form einer graphischen Darstellung dem Benutzer zur Verfügung gestellt.

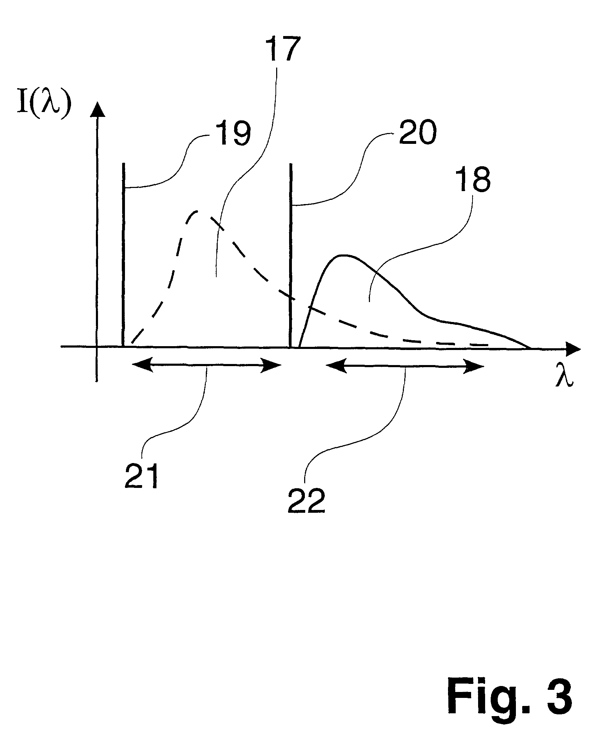

Die Fig. 3 zeigt ein Diagramm, in dem die Emissionsspektren 17, 18 der beiden Fluoreszenzfarbstoffe eingezeichnet sind. In dem Diagramm ist die spektrale Intensität als Funktion der Wellenlänge gezeigt. Ebenfalls gezeigt sind die beiden Anregungswellenlängen 19, 20 der Laserlichtquelle 7. Mit 21 ist der Detektionswellenlängenbereich des Detektormoduls 11 für den einen Fluoreszenzfarbstoff eingezeichnet, entsprechend ist mit 22 der Detektionswellenlängenbereich des zweiten Fluoreszenzfarbstoffs gezeigt. Bei den Anregungswellenlängen 19, 20 und bei den Detektionswellenlängenbereichen 21, 22 handelt es sich jeweils um Systemparameter, die mit dem erfindungsgemäßen Verfahren in ihrer Einstellung zu optimieren sind.

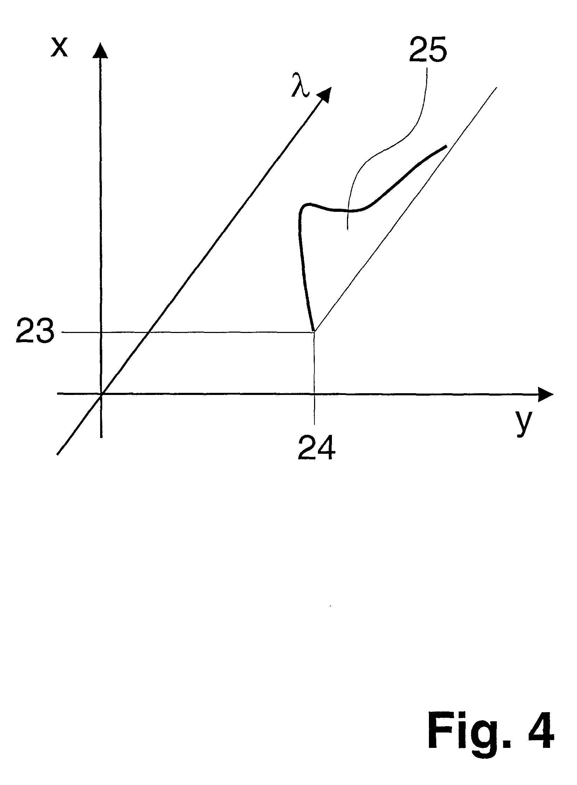

Die Fig. 4 zeigt in einer schematischen Darstellung die gemessene spektrale Intensität eines Objektpunkts mit den Koordinaten 23, 24. In der dritten Raumrichtung ist der gemessene spektrale Verlauf 25 der Wellenlängeninformation λ des Objektpunkts mit den XY-Koordinaten 23, 24 gezeigt.

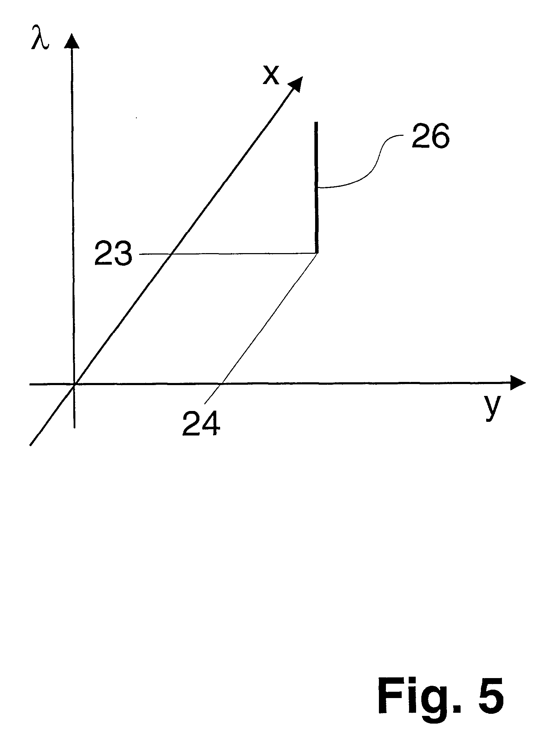

Die Fig. 5 zeigt eine Höhenplott-Repräsentation 26 der gemessenen Objektpunkte der XY-Ebene. Exemplarisch ist der charakteristische Wert des Maximums des gemessenen Spektrums 25 aus der Fig. 4 in diesem Punkt 23, 24 dargestellt.

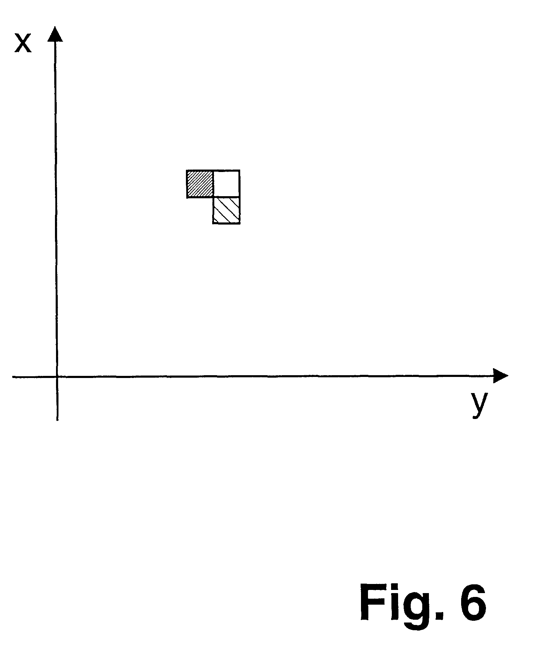

Die Fig. 6 zeigt in einer schematischen Darstellung eine zweidimensionale Fluoreszenzlebensdauerrepräsentation von drei eingezeichneten Objektpunkten einer XY-Ebene. Hell eingezeichnete Intensitätswerte repräsentieren eine kurze Fluoreszenzlebensdauer, in der Intensität abnehmende Helligkeitswerte repräsentieren längere Fluoreszenzlebensdauern.

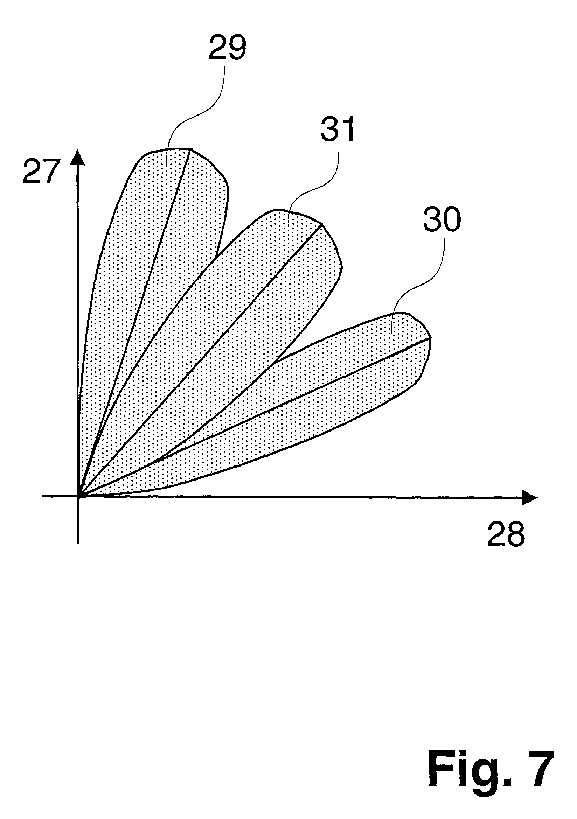

Die Fig. 7 zeigt eine zweidimensionale Histogramm-Repräsentation. Entlang der Richtung 27 sind die Häufigkeiten des Auftretens des ersten Fluoreszenzfarbstoffs aufgetragen, entlang der Richtung 28 sind die Häufigkeiten des zweiten Fluoreszenzfarbstoffs aufgetragen. Zur Messkeule 29 haben all diejenigen Objektpunkte einen Beitrag geliefert, an denen hauptsächlich der erste Fluoreszenzfarbstoff gemessen wurde. Zur Messkeule 30 haben vor allem die Objektpunkte einen Beitrag geliefert, an denen sich hauptsächlich der zweite Farbstoff befindet. Objektpunkte, an denen sich sowohl der eine Farbstoff als auch der andere Farbstoff zwei befindet sind in der Messkeule 31 gezeigt.

Zur weiteren Datendetektion ist im Rahmen des vorgebbaren Algorithmus 4 vorgesehen, dass die zunächst gemessenen Objektdaten gemäß den Fig. 4 bis 7 auf der Ausgabevorrichtung 16 repräsentiert werden. Lediglich schematisch ist in der Fig. 2 angedeutet, dass der vorgebbare Algorithmus 4 vor einer weiteren Datenaufnahme einen Systemparameter betreffend der Laserlichtquelle 7 über das Verbindungsmittel 32 und einen Systemparameter betreffend der Scanvorrichtung 8 über das Verbindungsmittel 33 einstellt bzw. verbessert. Nach einer ersten Datenaufnahme wird konkret die Laserleistung der Anregungswellenlänge 20 erhöht und die Scangeschwindigkeit der Scanvorrichtung 8 reduziert. Weiterhin ist schematisch angedeutet, dass über das Verbindungsmittel 34 die Ausgabevorrichtung 16 Systemparameter betreffend des Detektormoduls 11 verändert. Diese Veränderung erfolgt jedoch unter der Interaktion mit dem Benutzer des konfokalen Fluoreszenz-Rastermikroskops 1, der den einen Detektionswellenlängenbereich 21 des einen Farbstoffs in seiner Breite verkleinert.

Abschließend sei ganz besonders darauf hingewiesen, dass die voranstehend erörterten Ausführungsbeispiele lediglich zur Beschreibung der beanspruchten Lehre dienen, die sich jedoch nicht auf die Ausführungsbeispiele einschränken.

### Bezugszeichenliste

- 1: konfokales Fluoreszenz-Rastermikroskop
- 2: Systemparameter
- 3: detektierte Objektdaten
- 4: vorgebbarer Algorithmus
- 5: Objekt
- 6: Anregungslicht
- 7: Laserlichtquelle
- 8: Scanvorrichtung
- 9: Objektiv
- 10: dichroitischer Strahlteiler
- 11: Detektormodul
- 12: Intensitätssignale von Fluoreszenzfarbstoff A
- 13: Intensitätssignale von Fluoreszenzfarbstoff B
- 14: Positionssignal
- 15: Steuermodul
- 16: Ausgabevorrichtung
- 17: Spektrum von Fluoreszenzfarbstoff A
- 18: Spektrum von Fluoreszenzfarbstoff B
- 19: Anregungswellenlänge eins (von 7)
- 20: Anregungswellenlänge zwei (von 7)
- 21: Detektionswellenlängenbereich von Fluoreszenzfarbstoff A
- 22: Detektionswellenlängenbereich von Fluoreszenzfarbstoff B
- 23: X-Koordinate eines Objektpunkts
- 24: Y-Koordinate eines Objektpunkts
- 25: gemessenes Spektrum im Punkt 23, 24
- 26: Höhenplot-Repräsentation des Punkts 23, 24
- 27: Häufigkeiten von Fluoreszenzfarbstoff A
- 28: Häufigkeiten von Fluoreszenzfarbstoff B
- 29: Häufigkeitsverteilung von Fluoreszenzfarbstoff A
- 30: Häufigkeitsverteilung von Fluoreszenzfarbstoff B
- 31: Häufigkeitsverteilung von Objektpunkten mit Fluoreszenzfarbstoff A und B
- 32: Verbindungsmittel zwischen (4) und (7)
- 33: Verbindungsmittel zwischen (4) und (8)
- 34: Verbindungsmittel zwischen (16) und (11)

## Patentansprüche

1. Verfahren zur Analyse eines Objekts bei der konfokalen Fluoreszenz-Rastermikroskopie (1), **gekennzeichnet durch** folgende Schritte:
a. Detektieren von Objektdaten aus dem vom Objekt ausgehenden Licht bei einer vorgebbaren Einstellung von Systemparametern (2),
b. Verarbeiten der Objektdaten mit einem vorgebbaren Algorithmus,
c. Grafisches Aufbereiten der Objektdaten auf einer Ausgabevorrichtung (16)
d. Verändern der Systemparameter (2) anhand der verarbeiteten Objektdaten zur weiteren Detektion von Objektdaten mit den veränderten Systemparametern.

2. Verfahren nach Anspruch 1, **dadurch gekennzeichnet, dass** ein Systemparameter (2) die Anregungswellenlänge (19, 20) und/oder die Leistung der Lichtquelle (7) und/oder der Detektionswellenlängenbereich (21, 22) und/oder die Verstärkerspannung und der Verstärkeroffset des Photomultipier und/oder der Anregungspinhole-Durchmesser und/oder der Detektionspinhole-Durchmesser und/oder die Anzahl der Mittelungen mehrmals gescannter Objektbereiche und/oder die Scangeschwindigkeit und/oder die Abtastdichte des Beleuchtungsmusters und/oder die gescannte laterale bzw. axiale Bildfeldgröße und/oder der Vergrößerungsfaktor ist.

3. Verfahren nach Anspruch 1, **dadurch gekennzeichnet, dass** die Objektdaten (3) Intensitätsinformationen und/oder Wellenlängeninformationen (17, 18, 25) und/oder Zeitinformationen und/oder Polarisationsinformationen und/oder Fluoreszenzlebensdauerinformationen umfassen.

4. Verfahren nach Anspruch 1, **dadurch gekennzeichnet, dass** mehrere Objektdaten zu Objektdatensätzen zusammengefasst werden und der Algorithmus (4) das Verhältnis mehrerer Objektdatensätze zueinander umfasst.

5. Verfahren nach Anspruch 1, **dadurch gekennzeichnet, dass** der Algorithmus (4) eine Bestimmung des Signal-zu-Rausch-Verhältnisses der Objektdaten (3) und/oder eine Histogrammbildung der Objektdaten (3) umfasst und/oder eine Faltungsbildung und/oder eine Korrelationsoperation der Objektdaten (3) und/oder eine Mustererkennung und/oder eine Strukturanalyse der Objektdaten (3) umfasst.

6. Verfahren nach Anspruch 1, **dadurch gekennzeichnet, dass** das graphische Aufbereiten eine mindestens eindimensionale Intensitätsrepräsentation oder eine mindestens eindimensionale Farbrepräsentation oder eine mindestens eindimensionale Wellenlängenrepräsentation oder eine mindestens eindimensionale Polarisationsrepräsentation oder eine mindestens eindimensionale Fluoreszenzlebensdauerrepräsentation umfasst.

7. Verfahren nach Anspruch 1, **dadurch gekennzeichnet, dass** das graphische Aufbereiten in Form eines Höhenplots (26) erfolgt.

8. Verfahren nach Anspruch 7, **dadurch gekennzeichnet, dass** sich der Höhenplot auf eine Linie und/oder eine Bildebene und/oder einen Bildbereich bezieht.

9. Verfahren nach Anspruch 1, **dadurch gekennzeichnet, dass** die das graphische Aufbereiten in Form eines Histogramms erfolgt.

10. Verfahren nach Anspruch 1, **dadurch gekennzeichnet, dass** das graphische Aufbereiten eine Extremwertrepräsentation umfasst.

11. Verfahren nach Anspruch 1, **dadurch gekennzeichnet, dass** das graphische Aufbereiten eine Repräsentation charakteristischer Werte der Objektdaten (3) umfasst.

12. Verfahren nach einem der Ansprüche 1 bis 11, **dadurch gekennzeichnet, dass** anhand von vorgebbaren Kriterien eine weitere Datenaufnahme automatisch erfolgt.

13. Verfahren nach Anspruch 12, **dadurch gekennzeichnet, dass** ein Kriterium zur weiteren Datenaufnahme die Optimierung der Signalausbeute ist.

14. Verfahren nach einem der Ansprüche 1 bis 13, **dadurch gekennzeichnet, dass** zur weiteren Datenaufnahme dem Benutzer automatisch eine Auswahl von unterschiedlichen Detektionsmöglichkeiten vorgeschlagen wird.
